# DEMANDE DE BREVET EUROPEEN

(11) **EP 0 683 972 A1**
(43) Date de publication de la demande: **29.11.1995**
(21) Numéro de dépôt: 95401199.5
(22) Date de dépôt: 23.05.1995
(51) Int. Cl.: A01G 9/14

(54) **Structure de construction modifiable, notamment pour espaces de culture sous abri**

(30) Priorité: 26.05.1994 FR 9406392
(71) Demandeur: Lacoux, Michel, F-45270 Aubilliers en Gatinais (FR)
(72) Inventeur: Lacoux, Michel, F-45270 Aubilliers en Gatinais (FR)
(74) Mandataire: Gorree, Jean-Michel

(57) **Abrégé**

Structure de construction modifiable comportant, d'une part, une armature autoportante constituée de profilés rigides, droits (2) et courbés (3) en demi-cercle, assemblés les uns aux autres et, d'autre part, des plaques (5) supportées par les profilés de façon fixe ou coulisante ; les profilés droits (2) courbes (3) ont des sections droites identiques en forme et en dimensions et sont tubulaires avec une section généralement carrée ; au moins une face principale des profilés (2, 3) présente un premier ensemble de profils saillants (10) longitudinaux parallèles définissant au moins une première gorge ; au moins une face latérale des profilés (2, 3) présente un second ensemble de profils saillants longitudinaux parallèles définissant au moins deux gorges ; les profils respectifs des premier et second ensembles peuvent s'emboîter les uns dans les autres ; des inserts d'assemblage (4) de section carrée sont prévus pour réunir deux profilés (2 et/ou 3).

## Description

La présente invention concerne des perfectionnements apportés aux structures de construction modifiable, notamment pour espace de culture sous abri, comportant, d'une part, une armature autoportante constituée de profilés rigides, droits et courbes en demi-cercle ou en arc de cercle, assemblés les uns aux autres et, d'autre part, des plaques supportées par lesdits profilés de façon fixe ou de façon à pouvoir coulisser dans des glissières.

Dans le cadre de la présente invention, on entend désigner par structure de construction modifiable toute structure constituée comme défini ci-dessus qui délimite un volume susceptible de convenir pour des applications ou utilisations diverses. En particulier une telle structure peut parfaitement convenir pour constituer des espaces de culture sous abri, que l'on désignera ci-après d'une manière générale sous le nom de serres, terme qui ne doit pas être compris dans un sens rectrictif et par lequel entend désigner non seulement les serres proprement dites (et en particulier les serres dites serres tunnel), mais aussi toute structure, ouverte ou fermée, agencée pour élever des plantes vivantes et correspondant à la définition ci-dessus, qui peut être installée non seulement en extérieur, mais aussi en intérieur ou dans des emplacements abrités et éclairés (balcons, auvents,...).

On connaît actuellement de nombreuses structures, notamment des serres, et en particulier des serres tunnel, qui ont toutes pour principales caractéristiques d'être constituées d'éléments de structure assemblables de façon à permettre la réalisation d'agencements modulaires ou ajustables à la demande ; en particulier elles permettent la réalisation de serres plus ou moins longues par mise bout-à-bout d'un nombre approprié de tronçons de base.

Toutefois, toutes les structures connues présentent divers inconvénients et ne permettent pas de satisfaire certaines demandes.

Un inconvénient majeur réside dans la conception des éléments constitutifs des structures, qui sont de nombreux types différents, qui exigent donc des fabrications diversifiées et qui sont donc d'un côut de fabrication relativement élevé ; en outre ces éléments doivent être assemblées en général avec des moyens de liaison et des outils appropriés, dont la mise en oeuvre, dans le cas de structure livrées démontées, n'est pas toujours de la compétence de l'utilisateur.

Un autre inconvénient de ces structures connues réside dans l'encombrement important d'au moins certains éléments constitufs, voire dans le poids de ces éléments dans le cas de réalisations métalliques, qui rendent difficiles l'expédition, du vendeur vers l'acheteur, des structures livrées démontées, et qui de toute façon interdisent l'envoi par colis postal pour lesquels le poids maximum admis est relativement peu élevé.

Encore un autre inconvénient des structures connues réside dans l'étroitesse des possibilités de mise en oeuvre. En effet, les structures connues dites modulaires permettent certes de constituer des installations de tailles diverses; mais il s'agit toujours d'une multiplication d'un même type de base. Ainsi pour une serre tunnel, seule la longueur peut être adaptée par mise bout-à-bout d'un nombre approprié de tronçons élémentaires; il n'est pas possible de réaliser une installation d'un autre type, par exemple des serres d'appartement ou des coffres à plantes aux formes et aux volumes divers, à partir d'un jeu d'éléments de construction de base ; il en résulte que les structures de serres connues ne se prêtent pas à des démontages pour recomposer une installation de forme différente, autrement que par l'ajout d'un tronçon additionnel à un tronçon déjà en place.

Par conséquent, l'invention a essentiellement pour but de remédier, dans toute la mesure du possible, aux inconvénients présentés par les structures actuellement connues et de proposer une structure de construction modifiable perfectionnée qui réponde mieux aux diverses exigences de la pratique. En particulier, l'invention vise à proposer une structure ne comportant qu'un nombre très réduit d'éléments constitutifs de base qui soient de fabrication aisée et susceptibles d'être produits en très grande quantité et donc à moindre coût ; ces éléments étant réalisables en matière plastique et étant donc d'un poids restreint et ayant des dimensions peu importantes, les structures doivent pouvoir être plus facilement transportables sous forme démontée, et au moins pour les plus petites être susceptibles d'être expédiées par colis postal ; enfin et surtout les éléments de base en nombre restreint doivent pouvoir être assemblables les uns aux autres dans les configurations les plus diverses qui autorisent la réalisation de serre ou autres installations, d'extérieur ou d'intérieur, aux formes les plus complexes et dans des dimensions et des volumes quelconques, lesdits éléments devant en outre pouvoir être démontables de façon aisée afin de permettre des modifications et des recompositions des serres et autres installations.

A ces fins, une structure de construction modifiable telle que précisé plus haut, étant agencée conformément à l'invention, se caractérise essentiellement par la combinaison des dispositions qui suivent:
- les profilés droits et les profilés courbes ont des sections droites identiques en forme et en dimensions et sont tubulaires avec une forme générale externe sensiblement carrée et avec une section intérieure libre sensiblement carrée, les profilés ayant deux faces principales opposées, courbes dans les profilés courbes, et deux faces latérales opposées,
- au moins une face principale des profilés présente un premier ensemble de profils saillants qui s'étendent longitudinalement et parallèlement les uns aux autres et qui définissent entre eux au moins une première gorge ou gouttière,
- au moins une face latérale des profilés présente un second ensemble de profils saillants, qui s'étendent longitudinalement et parallèlement les uns aux autres et qui définissent entre eux au moins deux gorges ou gouttières,
- les profils respectifs des premier et second ensembles sont en outre configurés et dimensionnés de manière à pouvoir s'emboîter les uns dans les autres,
- enfin des inserts d'assemblage sont prévus pour réunir deux profilés, chaque insert étant constitué par un tronçon tubulaire de forme générale sensiblement rectangulaire avec deux faces latérales et deux faces de bout sensiblement carrées dimensionnées en correspondance avec la section intérieure libre des susdits profilés de manière qu'un insert d'assemblage puisse être introduit à l'intérieur d'un profilé, une desdites faces de bout étant munie de profils saillants identiques à ceux du susdit premier ensemble de profils et l'autre face de bout étant munie d'au moins un profil saillant complémentaire des profils du susdit premier ensemble de profils de façon à pouvoir s'emboîter dans la gorge ou gouttière définie entre eux par les susdits profils du premier ensemble.

L'agencement conforme à l'invention se révèle très intéressant pour répondre aux exigences diverses qui devaient être satisfaites.

En effet, les éléments principaux constitutifs de la structure sont réduits au nombre de trois, savoir des profilés droits, des profilés courbes et des inserts d'assemblage.

Encore faut-il noter que les profilés droits et courbes sont de conception identique, à la courbure près des profilés courbes. Cette quasi identité de forme générale et cette identité de forme de la section droite des profilés est mise à profit en réalisant les profilés en matière synthétique : outre un poids réduit par rapport à des profilés métalliques, il est possible de prévoir l'obtention des profilés courbes par cintrage de profilés droits chauds.

Il en résulte que seules deux filières de formes différentes sont nécessaires : une filière pour la production des profilés droits et des profilés courbes, lesquels sont obtenus par cintrage de profilés droits, et une filière pour la production de profilés droits qui, sectionnés en tronçons courts, fournissent les inserts d'assemblage.

Avantageusement, les deux faces principales des profilés sont configurées identiquement et les deux faces latérales des profilés sont configurées identiquement.

Dans un mode de réalisation préféré, les profils du premier ensemble de profils comprennent deux profils longitudinaux situés latéralement sur la face principale et ayant chacun une section approximativement en Ω, qui définissent une gorge entre eux.

Toujours dans une réalisation préférée, les profils du second ensemble de profils comprennent deux ailes centrales avec une section en T et deux ailes latérales avec une section en L, lesdites ailes étant disposées de façon sensiblement équidistantes et définissant entre elles trois gorges ouvertes vers l'extérieur.

Pour obtenir des emboîtements fermes et fiables, il est souhaitable que les profils en Ω soient stylisés avec une partie ventrue de section rectangulaire et que les gorges définies par les ailes en T et en L soient de section rectangulaire complémentaire de la section des susdits Ω. Dans ce cas, il est avantageux que les profilés en Ω précités possèdent un contour fermé ce qui accroît la rigidité et l'indéformabilité du profilé ou de l'insert.

Les formes et dimensions spécifiques données aux profils et ailes saillant sur les faces des profilés et des inserts autorisent de la façon la plus simple possible de nombreux types d'assemblage : non seulement l'assemblage de deux profilés par leurs extrémités respectives (soit perpendiculairement l'un à l'autre à l'aide d'un insert, soit dans le prolongement l'un de l'autre à l'aide de deux inserts assemblés bout-à-bout), mais aussi l'assemblage de l'extrémité d'un profilé en n'importe quel endroit de la longueur d'un autre profilé, et également l'assemblage face contre face de deux profilés soit pour constituer un élément d'ossature renforcé, soit pour constituer un élément à décrochements ou en gradins.

On conçoit, dès lors, que l'assemblage des éléments n'est plus limité à la réalisation d'un seul type de base (par exemple de la seule serre-tunnel), mais peut conduire à toute sorte de réalisations pouvant avoir les formes et les dimensions les plus diverses au gré des souhaits de l'utilisateur et des applications et utilisations envisagées.

En outre, les profilés droits peuvent être produits dans un nombre restreint de longueurs (par exemple deux longueurs) si l'on souhaite réduire au minimum le nombre des pièces à fabriquer et à tenir en stock à la production ; ou bien au contraire peuvent être fournis dans une gamme étendue de longueurs diverses si la demande à ce sujet existe. Eventuellement, un utilisateur peut facilement scier des profilés existants pour obtenir une longueur particulière propre à une réalisation spécifique.

De toute façon, les coûts de production sont réduits à un minimum, tandis que les éléments peuvent sans difficultés être fabriqués dans des dimensions propres à faciliter leur expédition vers les utilisateurs, par exemple par colis postal.

Pour éviter d'avoir recours à des organes spécifiques de blocage et/ou de verrouillage qui seraient nécessaires dans le cas où les faces latérales des inserts d'assemblage sont mutuellement sensiblement parallèles, il est avantageux de constituer lesdites faces latérales avec un galbe vers l'extérieur et de prévoir un cloisonnement rigide à l'intérieur de l'insert entre les faces de bout, de sorte que l'introduction de l'insert d'assemblage dans un profilé s'accompagne d'une déformation élastique des faces galbées et provoque automatiquement le blocage des deux profilés l'un par rapport à l'autre, sur l'insert (insert autobloquant).

Les profils et ailes saillants prévus sur les faces des profilés ont non seulement pour fonction de permettre l'assemblage des profilés pour constituer l'ossature de la serre, mais ils ont également pour fonction de permettre le montage des divers panneaux (notamment transparents ou translucides pour une serre) fixes ou mobiles, qui ferment le volume de la structure.

Ainsi, il est souhaitable de prévoir un jonc à section en n apte à être solidarisé le long d'un bord respectif de chaque panneau coulissant et à être engagé et retenu dans une des susdites gorges définies par les profils du second ensemble d'une face latérale d'un profilé, pour guider à coulissement ledit panneau. Un tel agencement s'applique en particulier aux panneaux courbes coulissants des serres tunnel, et notamment aux serres tunnel.

De même, il est souhaitable de prévoir un jonc à section en double T apte à être solidarisé le long d'un bord respectif d'un panneau fixe et à être engagé dans la gouttière définie par les profils du premier ensemble de la face principale d'un profilé courbe. Un tel agencement est utilisable en particulier soit pour manoeuvrer une plaque coulissante, soit pour bloquer une plaque de fermeture d'extrémité en forme de demi-disque d'une serre tunnel ou bien une plaque intermédiaire formant cloison ou tablette.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :
- la figure 1A est une vue d'ensemble, en perspective, d'une structure de construction modifiable de base, telle qu'une serre de type serre tunnel, agencée conformément à l'invention ;
- la figure 1B est une vue éclatée, en perspective, montrant les éléments composants principaux de la structure de la figure 1A ;
- la figure 2 est une vue de la section d'un profilé réalisé conformément à l'invention ;
- la figure 3A est une vue en perspective d'un insert d'assemblage réalisé conformément à l'invention ;
- la figure 3B est une vue de dessus en coupe d'une variante de réalisation d'un insert d'assemblage conforme à l'invention ;
- la figure 4 est une vue partielle en perspective illustrant de façon groupée plusieurs modes d'assemblage de profilés conformément à l'invention ;
- la figure 5 est une vue partielle en perspective illustrant l'association d'un profilé courbe avec des panneaux coulissants et un panneau de bout ; et
- les figures 6A à 6C illustrent, de façon très schématique, un certain nombre d'exemples de serres de formes, dimensions et de volumes divers, réalisables conformément à l'invention.

Bien que, comme déjà précisé plus haut, la structure de construction modifiable conforme à l'invention soit susceptible de trouver application dans les domaines les plus divers, la description détaillée qui suit porte plus particulièrement sur des serres, car ce type d'application semble devoir être tout spécialement intéressant.

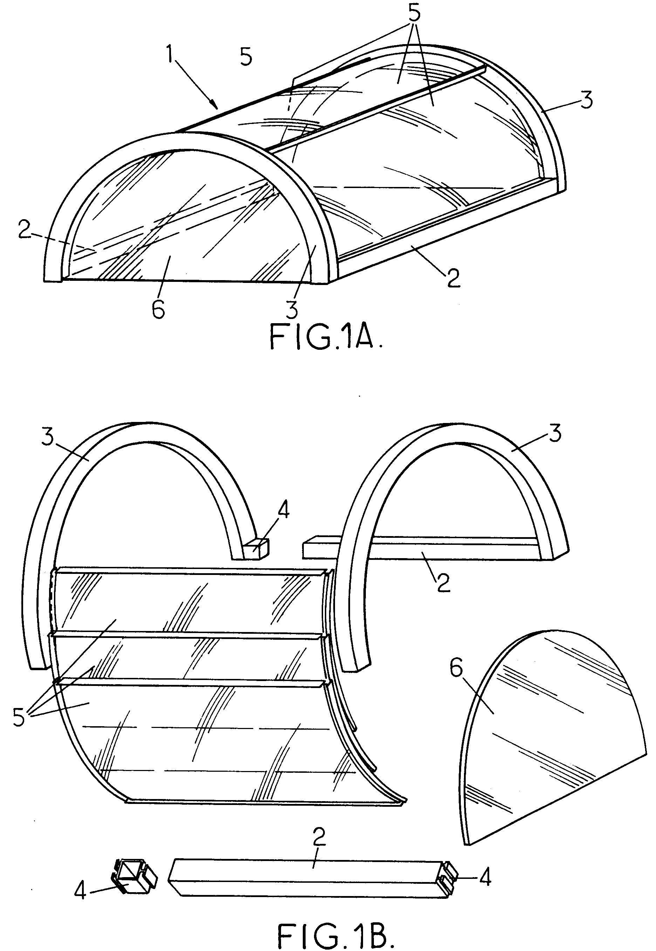

On se réfère tout d'abord aux figures 1A et 1B qui montrent une serre 1, du type serre tunnel, qui est une forme de base simple pouvant servir à comprendre aisément l'invention.

La serre 1 comporte , d'une part, une armature ou ossature autoportante constituée de profilés rigides assemblés les uns aux autres. On notera des profilés droits 2 qui définissent ici une base carrée ou rectangulaire et des profilés courbes 3 en demi-cercle ou en arc de cercle qui sont situés aux extrémités de la base en s'étendant sensiblement perpendiculairement à celle-ci. Les profilés droits 2 qui sont représentés sont au nombre de deux et correspondent à la longueur de la base ; des profilés droits (non montrés) peuvent éventuellement être prévus pour fermer la base sur ses autres côtés.

Des pièces d'assemblage ou inserts d'assemblage 4 permettent de réunir les extrémités coopérantes des profilés droits 2 et courbes 3.

La serre 1 comporte également des panneaux 5 transparents ou translucides, de forme cintrée en segment de cylindre de révolution, qui sont montés à coulissement dans des rainures ou gorges des profilés courbes 3. Ces panneaux peuvent être au nombre de deux, trois ou plus encore. Des panneaux de bout 6, fermant les deux extrémités de la serre, sont également retenus par les profilés courbes 3.

Dans le cas d'une serre d'appartement, un panneau de fond (non montré) pourrait être supporté par les profilés droits 2 complétés par des profilés droits en bout.

L'agencement spécifique des différents éléments composants va maintenant être expliqué de façon détaillée.

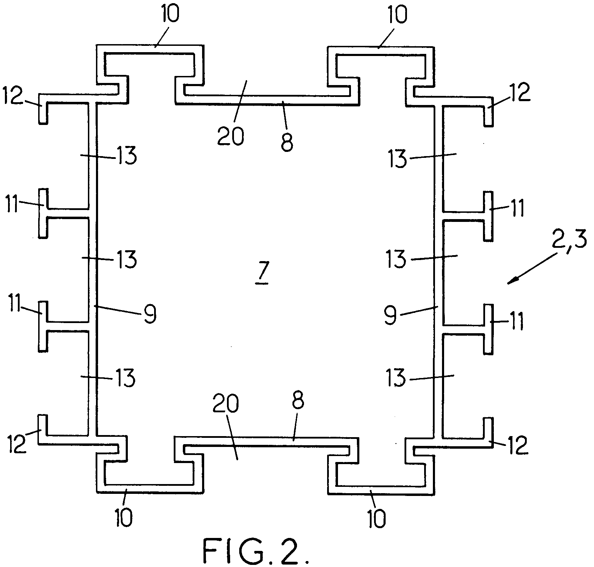

Les profilés droits 2 et les profilés courbes 3 ont tous des sections droites identiques en forme et en dimension, cette section étant illustrée à la figure 2. Ces profilés 2 et 3 sont tubulaires avec une forme générale externe sensiblement carrée et avec une section intérieure libre 7 sensiblement également carrée.

Les profilés 2 et 3 possèdent deux faces principales opposées 8, qui sont courbes dans les profilés courbes 3, et deux faces latérales opposées 9.

Chaque face principale 8 des profilés présente des profils saillants 10, qui s'étendent longitudinalement sur toute la longueur du profilé et parallèlement les uns aux autres ; par exemple il s'agit de deux profils avec une section approximativement en Ω qui sont situés au voisinage des bords longitudinaux respectifs de la face 8; de préférence, comme représenté, les profils en Ω sont stylisés avec une partie ventrue qui possède une section sensiblement rectangulaire ; pour permettre une fabrication du profilé par extrusion à travers une filière d'extrusion comme cela sera précisé plus loin, il est souhaitable que lesdites parties ventrues des profils en n s'ouvrent vers l'intérieur 7 du profilé.

Chaque face latérale 9 des profilés présente plusieurs ailes profilées saillantes, savoir : deux ailes centrales 11 avec une section en T et deux ailes latérales 12 avec une section en L. Les ailes en T et en L s'étendent longitudinalement sur toute la longueur du profilé et parallèlement les unes aux autres en étant sensiblement équidistantes les unes des autres. Elles définissent entre elles trois gorges 13 sensiblement identiques, ouvertes vers l'extérieur, qui de préférence ont une section sensiblement rectangulaire.

Enfin, les profils 10 en Ω et les ailes 11 en T et 12 en L sont configurées et dimensionnées de manière que les deux profils 10 en Ω d'un profilé puissent être engagés dans deux gorges extrêmes 13 des susdites trois gorges 13 définies par les ailes 11 et 12 d'un autre profilé.

Dans un mode de fabrication économique, les profilés 2 et 3 sont constitués en matière synthétique, notamment en matière thermoplastique rigide. Les profilés peuvent alors être fabriqués sous forme de profilés droits par extrusion à travers une filière, ces profilés droits pouvant être sectionnés en tronçons ayant la longueur ou les longueurs souhaitées ; les profilés courbes 3 peuvent, quant à eux, être formés par cintrage de profilés droits chauds selon tout procédé connu de l'Homme de l'Art. Une seule filière permet ainsi de produire les deux formes (droite et courbe) de profilé nécessaires, quelles que soient les dimensions (longueur des profilés droits, longueur et rayon de courbure des profilés courbes) desdits profilés.

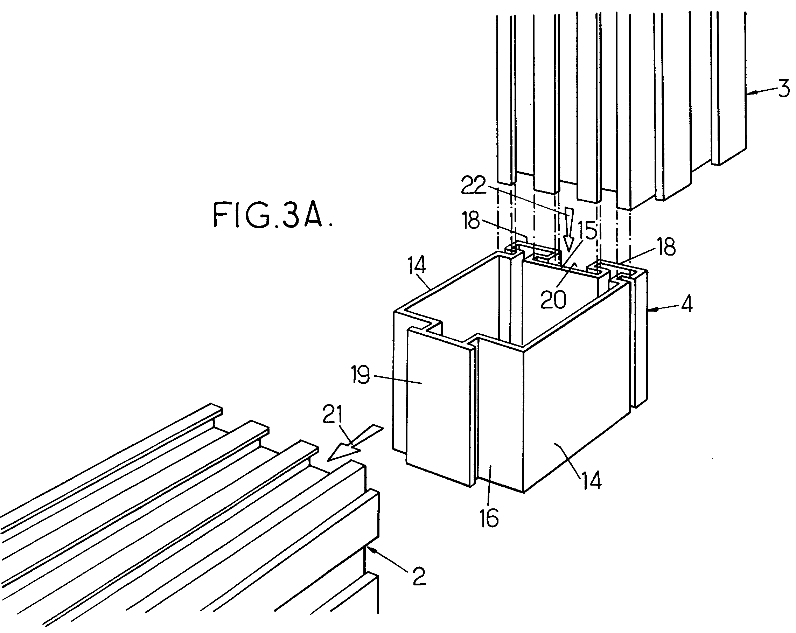

Pour ce qui est maintenant des inserts d'assemblage 4, ils sont, comme visible à la figure 3A, constitués par un tronçon tubulaire de forme générale sensiblement rectangulaire. L'insert 4 présente deux faces latérales 14 opposées qui sont lisses et qui, dans l'exemple montré à la figure 3A, sont sensiblement parallèles l'une à l'autre. Il présente également deux faces de bout 15 et 16 sensiblement carrées, dimensionnées en correspondance avec la section intérieure libre 7 des profilés 2, 3.

La face de bout 15 présente les mêmes profils 10 que les faces 8 des profilés, savoir ici, au voisinage de ses bords longitudinaux, deux profils latéraux saillants 18, qui s'étendent longitudinalement et sensiblement parallèlement l'un à l'autre, avec une section approximativement en Ω ; de préférence comme représenté les profils 18 sont stylisés avec une partie ventrue qui possède une section sensiblement rectangulaire. D'une façon générale, les profils 18 en Ω sont identiques, en forme et en dimension, aux profils 10 en Ω des faces principales des profilés 2 et 3.

La face de bout opposée 16 présente, sensiblement en son milieu, un profil central saillant 19 avec une section approximativement en forme de T large dont le contour externe est complémentaire de l'évidement 20 défini entre eux par les profils saillants en Ω 10 des faces principales des profilés 2 et 3 ou 18 de la face de bout 15 de l'insert d'assemblage.

De même que précédemment, il est souhaitable que les parties ventrues des profils 18 en Ω soient creuses et s'ouvrent vers l'intérieur de l'insert 4, tandis que le profil 19 en T large possède une jambe creuse définie par deux parois et ouverte vers l'intérieur de l'insert 4. Il est ainsi possible de réaliser les inserts d'assemblage 4 par tronçonnage d'un profilé extrudé en un matériau quelconque, notamment thermoplastique, à travers une filière.

La fonction assurée par l'insert 4 est illustrée à la figure 3A. Sur les profils 18 de la face 15 qui demeurent accessibles à l'extrémité du profilé 2 sont emboîtés (flèche 22) les profils complémentaires de la face latérale 9 d'un autre profilé, soit un profilé droit, soit comme figuré ici un profilé courbe 3, qui s'étend transversalement et sensiblement perpendiculairement au profilé 2 précité. L'insert 4 est introduit (flèche 21), par exemple sa face de bout 16 tournée vers l'avant, à l'intérieur d'un profilé, par exemple d'un profilé droit 2, en étant guidé à l'intérieur dudit profilé par ses faces lisses 14, jusqu'à ce que la face de bout opposée 15 affleure l'extrémité du profilé 2. Des moyens de blocage (agrafe, vis, téton emboîtable dans un évidement, ...) peuvent assurer le blocage de l'insert dans le profilé.

Bien entendu, l'insert 4 peut être introduit dans le profilé 2 avec sa face 15 en avant, de manière que le profil 19 de sa face 16 soit saillant et reçoive les profils complémentaires de la face principale 8 d'un profilé transversal droit 2 ou courbe 3.

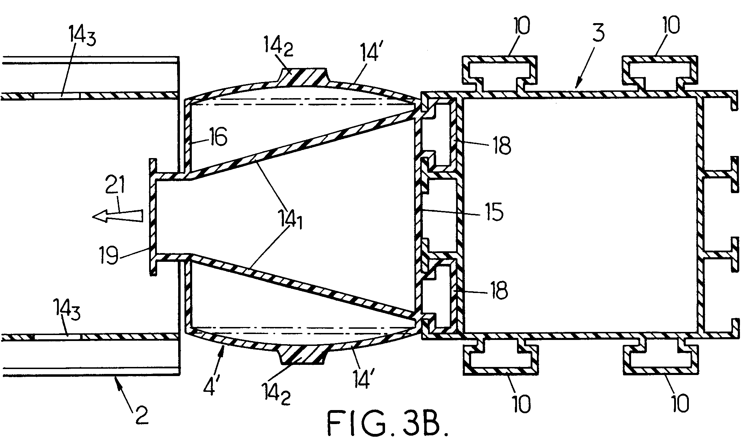

Pour éviter le recours à des moyens de blocage de l'insert 4 à l'intérieur d'un profilé 2 ou 3, il est intéressant de concevoir l'insert et/ou l'extrémité intérieure des profilés de manière que l'insert soit automatiquement bloqué en position. Dans l'exemple de la figure 3B qui montre un mode de réalisation préféré d'un insert, l'insert 4' est autobloquant et est conçu dans son ensemble de la même façon que l'insert 4 précédent, à ceci près que les faces latérales 14' ne sont pas parallèles l'une à l'autre, mais sont bombées vers l'extérieur tout en étant élastiquement déformables. En outre, l'insert 14' présente intérieurement des cloisons rigides 14₁ s'étendant entre les faces de bout 15 et 16 de manière à constituer un quadrilatère dont les grands côtés demeurent indéformables et de dimensions constantes. Plus précisément, dans le mode de réalisation préféré représenté, chaque cloison 14₁ s'étend depuis un pied respectif du profil 19 en n situé sur la face 16 jusqu'au pied extérieur du profil 18 en Ω respectif situé sur la face 15 opposée.

Lors de l'introduction à force de l'insert dans le profilé 2 après son emboîtement préalable sur un profilé 3, les faces 14' se déforment (configuration montrée en tirets) et appuient élastiquement sur les parois du profilé 2 en s'applatissant contre celles-ci. Cette déformation des faces 14' ainsi que la résistance des cloisons 14₁ entraînent une déformation (bombement) des faces opposées 15 et 16, qui à son tour tend à provoquer un gauchissement des profils 18 en Ω ; ceux-ci engendrent un serrage avec blocage sur les profils 12 en L et 11 en T du profilé 3 sur lesquels ils sont emboîtés (cas représenté sur la fig. 3B). Dans le cas (non représenté) où le montage de l'insert 4' serait inversé (introduction à force de l'insert dans le profilé 3 après son emboîtement préalable sur un profilé 2), la susdite déformation entraîneraît un gauchissement de la face de bout 16 de part et d'autre du profil 19 en π, qui engendrerait un serrage avec blocage sur les profils 10 en Ω du profilé 3 sur lesquels ils seraient emboîtés.

Comme représenté à la figure 3B, le blocage mécanique de l'insert 4' à l'intérieur du profilé 2 est obtenu en prévoyant, sur au moins une face latérales 14'et de préférence sur les deux faces 14', un téton saillant 14₂ qui, lorsque l'insert est correctement introduit dans le profilé 2, s'emboîte dans un évidement ou une cavité 14₃ creusée dans la paroi du profilé 2.

Par ailleurs, sur la fig. 3B on a représenté également, indépendamment des dispositions qui précèdent, une variante de réalisation des profils en Ω (profils 18 de l'insert 4', profils 10 du profilé 3) : les profils en Ω ne sont plus ouverts vers l'intérieur de l'insert ou du profilé respectif comme représenté aux figures 2 et 3A, mais ils sont fermés par une cloison qui est située dans l'alignement de la face correspondante et qui assure la continuité de celle-ci ; chaque profil en Ω est donc ici réalisé sous forme d'un profil fermé ou profil tubulaire. Il en résulte une rigidité mécanique accrue du profilé ou de l'insert et une meilleure indéformabilité de celui-ci.

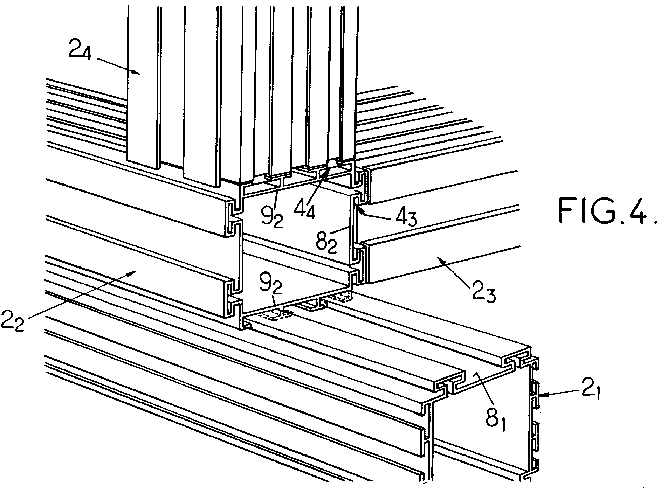

Pour mieux fixer les idées, la figure 4 est une vue partielle en perspective qui illustre l'assemblage de plusieurs profilés entre eux. Tout d'abord, deux profilés droits 2₁ et 2₂ sont assemblés l'un sur l'autre, une face principale 8₁ du profilé inférieure 2₁ étant assemblée à une face latérale 9₂ complémentaire du profilé supérieur 2₂. Il est aussi possible de réaliser des longerons à résistance mécanique renforcée (deux profilés 2₁ et 2₂ superposés) ou bien de réaliser une structure allongée en gradins (deux profilés 2₁ et 2₂ emboîtés l'un à l'autre uniquement au voisinage de leurs extrémités respectives).

Un autre profilé droit 2₃ (ou courbe) est assemblé, par son extrémité, à une face principale 8₂ du profilé 2₂ par l'intermédiaire d'un insert 4₃, tandis qu'un autre profilé droit 2₄ (ou courbe) est assemblé, par son extrémité, à l'autre face latérale 9₂ du profilé 2₂ par l'intermédiaire d'un insert 4₄. On notera que les profilés 2₃ et 2₄ peuvent être positionnés en n'importe quel emplacement de la longueur de la face correspondante du profilé 2₂.

On remarquera que les extrémités de deux profilés droit 2 et/ou courbe 3 peuvent être réunies bout-à-bout, coaxialement, par l'accouplement bout-à-bout de deux inserts respectifs disposés à l'envers l'un de l'autre.

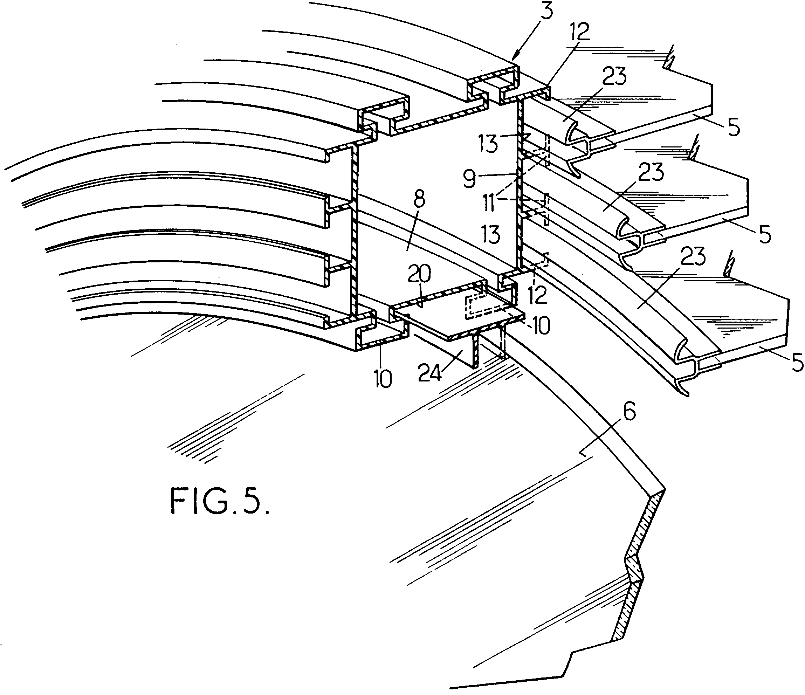

La figure 5 illustre la fonction de support de panneau en considérant à titre d'exemple un profilé courbe 3 étant entendu que la même fonction peut être assumée par des profils droits 2. Comme indiqué plus haut en relation avec la figure 2, les faces latérales opposées 9 des profilés sont pourvues de profils saillants 11, 12 qui, ensemble, définissent des gouttières ou rainures 13. Les gouttières 13 des faces latérales des profilés courbes 3 peuvent être utilisées pour supporter à libre coulissement les bords d'un nombre correspondant (ici trois) de panneaux coulissants 5. A cet effet, le bord courbe de chaque panneau 5 est solidarisé à un jonc courbe 23 à section en forme générale de Ω qui est emboîté et retenu dans une gouttière respective 13. Bien entendu, un montage analogue avec un jonc droit de même section peut être adopté pour assembler des panneaux coulissants à bord droit sur des profilés droits 2.

D'une façon analogue, sur la face principale 8 de plus faible rayon de courbure (face 8 inférieure sur la figure 5) du profilé courbe 3, les deux profils saillants 10 déterminent entre eux une gorge 20 qui peut retenir un panneau de bout 6 en forme de demi-disque. A cette fin, le bord semi-circulaire du panneau 6 est solidarisé à un jonc 24 (continu ou segmenté) en forme approximative de π dont la tête transversale est retenue dans la gorge 20. Bien entendu, un montage analogue peut être adopté pour assembler des panneaux fixes à bords droits sur des profilés droits 2, avec un jonc droit de même section.

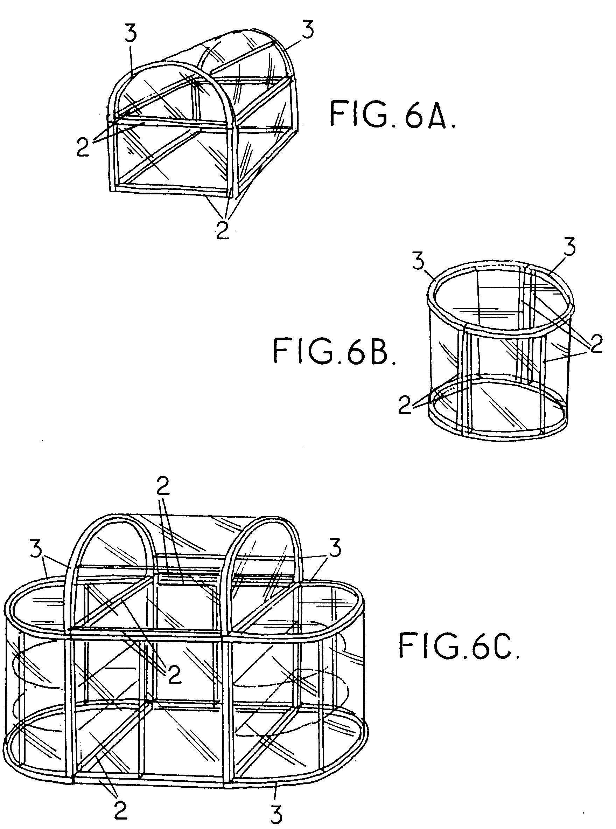

On conçoit dès lors que la structure de serre qui vient d'être décrite non seulement permet la réalisation de serres du type serre-tunnel dans une configuration modulaire qui confère une très grande souplesse d'adaptation aux besoins précis des utilisateurs, mais encore et surtout qu'elle autorise la conception et la réalisation de serres ou analogues ayant des configurations et des dimensions quelconques, au gré des souhaits des utilisateurs, et qu'enfin elle se prête à des remaniements et transformations ultérieurs. Les figures 6A, 6B et 6C illustrent respectivement trois exemples (non limitatifs) de serres réalisables avec des moyens proposés par l'invention. Malgré la souplesse d'emploi des moyens proposés conformément à l'invention, le nombre des pièces composantes reste très faible, et en particulier le nombre des types de profilés est réduit à trois (profilé droit, profilé courbe et insert) qui sont obtenus économiquement à l'aide de seulement deux filières différentes, tout en laissant la possibilité d'offrir une gamme de profilés droits de longueurs différentes et une gamme de profilés courbes de rayons de courbures différents.

Lorsque la structure qui vient d'être décrite est destinée notamment à être implantée en plein air et à être exposée aux vents, il est possible de prévoir son lestage en remplissant au moins les profilés inférieurs, et éventuellement aussi les autres profilés de la structure, avec un matériau pesant, de préférence pulvérulent, avantageusement du sable ou de la terre fine. Des bouchons d'extrémité (non représentés) peuvent obturer alors les extrémités des profilés ainsi remplis.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Structure de construction modifiable comportant, d'une part, une armature autoportante constituée de profilés rigides, droits et courbés en demi-cercle ou en arc de cercle, assemblés les uns aux autres et, d'autre part, des plaques supportées par lesdits profilés de façon fixe ou de façon à pouvoir coulisser dans des glissières, caractérisée par la combinaison des dispositions qui suivent:
- les profilés droits (2) et les profilés courbes (3) ont des sections droites identiques en forme et en dimensions et sont tubulaires avec une forme générale externe sensiblement carrée et avec une section intérieure libre (7) sensiblement carrée, les profilés ayant deux faces principales (8) opposées, courbes dans les profilés courbes, et deux faces latérales (9) opposées,
- au moins une face principale (8) des profilés présente un premier ensemble de profils saillants (10) qui s'étendent longitudinalement et parallèlement les uns aux autres et qui définissent entre eux au moins une première gorge ou gouttière (20),
- au moins une face latérale (5) des profilés présente un second ensemble de profils saillants (11, 12) qui s'étendent longitudinalement et parallèlement les uns aux autres et qui définissent entre eux au moins deux gorges ou gouttières (13),
- les profils respectifs des premier et second ensembles sont en outre configurés et dimensionnés de manière à pouvoir s'emboîter les uns dans les autres,
- enfin des inserts d'assemblage (4, 4') sont prévus pour réunir deux profilés (2 et/ou 3), chaque insert étant constitué par un tronçon tubulaire de forme générale sensiblement rectangulaire avec deux faces latérales (14, 14') et deux faces de bout (15, 16) sensiblement carrées dimensionnées en correspondance avec la section intérieure libre des susdits profilés de manière qu'un insert d'assemblage puisse être introduit à l'intérieur d'un profilé, une desdites faces de bout (15) étant munie de profils saillants (18) identiques à ceux du susdit premier ensemble de profils (10) et l'autre face de bout (16) étant munie d'au moins un profil saillant (19) complémentaire des profils du susdit premier ensemble de profils (11, 12) de façon à pouvoir s'emboîter dans la gorge ou gouttière (20) définie entre eux par les susdits profils du premier ensemble.

2. Structure selon la revendication 1, caractérisée en ce que les deux faces principales des profilés sont configurés identiquement et en ce que les deux faces latérales des profils sont configurées identiquement.

3. Structure selon la revendication 1 ou 2, caractérisée en ce que les profils du premier ensemble comprennent deux profils longitudinaux (10) situés latéralement sur la face principale (8) et ayant chacun une section approximativement en Ω, qui définissent une gorge (20) entre eux.

4. Structure selon la revendication 1 ou 2, caractérisée en ce que les profils du second ensemble comprennent deux ailes centrales (11) avec une section en T et deux ailes latérales (12) avec une section en L, lesdites ailes (11, 12) étant disposées de façon sensiblement équidistantes et définissant entre elles trois gorges (13) ouvertes vers l'extérieur.

5. Structure selon les revendications 3 et 4, caractérisée en ce que les profils (10) en Ω sont stylisés avec une partie ventrue de section rectangulaire et en ce que les gorges (13) définies par les ailes (11, 12) en T et en L sont de section rectangulaire complémentaire de la section des susdits Ω.

6. Structure selon l'une quelconque des revendications 1 à 5, caratérisée en ce que les profils en Ω (10,18) précités ont un contour fermé.

7. Structure selon l'une quelconque des revendications 1 à 6, caractérisée en ce que les faces latérales (14') des inserts d'assemblage (4') sont galbées vers l'extérieur et en ce qu'un cloisonnement rigide (14₁) de renforcement est prévu à l'intérieur de l'insert entre les faces de bout (15, 16), ce grâce à quoi ces faces sont déformées élastiquement lorsque l'insert est introduit dans un profilé et provoque automatiquement un blocage des deux profilés l'un par rapport à l'autre, sur l'insert.

8. Structure selon la revendication 7, caractérisée en ce que l'insert d'assemblage (4') présente une face de bout (15) munie d'au moins deux profils (18) en Ω et une face de bout (16) munie d'un profil (19) en π et en ce que deux cloisons rigides (14₁) joignent respectivement les deux pieds dudit profil (19) en π au pied extérieur respectivement des deux profils (18) en Ω.

9. Structure selon l'une quelconque des revendications 1 à 8, caractérisée en ce qu'il est prévu en outre un jonc (23) à section en Ω apte à être solidarisé le long d'un bord respectif de chaque panneau coulissant (5) et à être engagé et retenu dans une des susdites gorges (13) définies par les profils (11, 12) du second ensemble d'une face latérale d'un profilé, pour guider à coulissement ledit panneau.

10. Structure selon l'une quelconque des revendications 1 à 9, caractérisée en ce qu'il est prévu en outre un jonc (24) à section en double T apte à être solidarisé le long d'un bord respectif d'un panneau fixe (6) et à être engagé dans la gouttière (20) définie par les profils du premier ensemble de la face principale d'un profilé.

11. Structure selon la revendication 7, caractérisée en ce que les profilés sont produits par extrusion.

12. Structure selon l'une quelconque des revendications 1 à 11, caractérisée en ce que les profilés droits et les profilés courbes sont constitués en matière synthétique rigide et en ce que les profilés courbes sont obtenus par cintrage de profilés droits.
